# EUROPEAN PATENT SPECIFICATION

(11) **EP 1 415 235 B1**
(45) Date of publication and mention of the grant of the patent: **31.10.2018**
(21) Application number: 02752332.3
(22) Date of filing: 15.07.2002
(51) Int. Cl.: H04L 29/06, H04L 29/08

(54) **DATA REPLICATION SYSTEM AND METHOD**
DATENREPLIKATIONSYSTEM UND VERFAHREN
SYSTÈME ET PROCÉDÉ DE REPRODUCTION DE DONNEES

(30) Priority: 16.07.2001 US 305986 P; 16.07.2001 US 305978 P; 11.10.2001 US 975590; 11.10.2001 US 975587
(43) Date of publication of application: 06.05.2004
(73) Proprietor: Oracle International Corporation, Redwood Shores, CA 94065 (US)
(72) Inventor: JACOBS, Dean, Bernard, Berkeley, CA 94707 (US); KRAMER, Reto, San Francisco, CA 94133 (US); SRINIVASAN, Ananthan, Bala, San Francisco, CA 94131 (US)
(74) Representative: D Young & Co LLP
(86) International application number: PCT/US2002/022366
(87) International publication number: WO 2003/009092

(56) References cited:
- CA-C- 2 212 477
- US-A- 5 765 171
- US-A- 5 920 867
- US-A- 5 987 376
- US-A- 6 088 694
- US-B1- 6 233 589
- US-B1- 6 263 372

## Description

### TECHNICAL FIELD

The invention relates generally to a system for transferring data. The invention relates more specifically to a system and method for replicating data over a network.

### BACKGROUND

There are several types of distributed processing systems. Generally, a distributed processing system includes a plurality of processing devices, such as two computers coupled through a communication medium. One type of distributed processing system is a client/server network. A client/server network includes at least two processing devices, typically a central server and a client. Additional clients may be coupled to the central server, there may be multiple servers, or the network may include only servers coupled through the communication medium.

In such a network environment, it is often desirable to send applications or information from the central server to a number of workstations and/or other servers. Often, this may involve separate installations on each workstation, or may involve separately pushing a new library of information from the central server to each individual workstation and/or server. These approaches can be time consuming and are an inefficient use of resources. The separate installation of applications on each workstation or server also introduces additional potential sources of error.

Ideally, the sending of information should be both reliable in the face of failures and scalable, so that the process makes efficient use of the network. Conventional solutions generally fail to achieve one or both of these goals. One simple approach is to have a master server individually contact each slave and transfer the data over a point-to-point link, such as a TCP/IP connection. This approach leads to inconsistent copies of the data if one or more slaves are temporarily unreachable, or if the slaves encounter an error in processing the update. At the other extreme are complex distributed agreement protocols, which require considerable cross-talk among the slaves to ensure that all copies of the data are consistent.

US 5987376 discloses a system and method for sharing common data and state information between network connected application clients participating in an application session. The application session is invoked by a host client. The host client is responsible for selectively admitting other network connected clients into the application session, and is also the application client that is responsible for distributing a common set of application data for storage at each admitted application client. The application data includes a unique identifier, assigned by the host client, for each application client in the application session. In the event that an application client effects a change to the application data, that change is communicated to each of the other application clients in the session. In this way, each client is always operating on a common set of application data. When a new client is admitted into an application session, application data is forwarded to it in a manner so that the new client receives data that is synchronized with the data possessed by every other application client in the session. A method for migrating host client duties to another application client is also disclosed.

In US6,233,589, a method of reflecting differences between two files is described. The method includes generating a base signature file having a plurality of base bit patterns, each base bit pattern being generated as a function of a portion of data in a first file. A second file containing a plurality of revised bit patterns is generated from a second file. Each revised bit pattern is compared to and matches at least one of the base bit patterns. A delta file reflecting the differences between a first file and the second file based on the base signature file, the delta signature file, and the second file is created.

In US5,765,171, a replication protocol is described which includes associating a database version vector with each copy of the database in the system. Each database version vector keeps track of the total number of updates to any data items in its respective database replica and from which server those updates were originally performed. During replication between two replicas, the database version vectors of the replicas are compared to efficiently determine if update replication is necessary.

### BRIEF SUMMARY

The object of the invention is achieved by the subject-matter of the independent claims. Advantageous embodiments are defined in the dependent claims. Further examples are provided for facilitating the understanding of the invention.

### BRIEF DESCRIPTION OF THE DRAWINGS

Figure 1 is a diagram of a domain structure in accordance with one embodiment of the present invention.
Figure 2 is a diagram of layered architecture in accordance with one embodiment of the present invention.
Figure 3 is a diagram of a clustered domain structure in accordance with one embodiment of the present invention.
Figure 4 is a diagram of one phase process for a layered architecture in accordance with one embodiment of the present invention.
Figure 5 is a diagram of two phase process for a layered architecture in accordance with one embodiment of the present invention.
Figure 6 is a flowchart for a one phase process in accordance with one embodiment of the present invention.
Figure 7 is a flowchart for a two phase process in accordance with one embodiment of the present invention.

### DETAILED DESCRIPTION

The present invention, as defined in the independent claims, provides for the replication of data or other information, such as from a master server, or "administration" server ("Admin server"), to a collection of slave servers, or "managed" servers. This replication can occur over any appropriate network, such as a conventional local area network or ethernet. In one embodiment, a master server owns the original record of all data on the network, to which any updates are to be applied. A copy of the data, together with updates as they occur, can be transmitted to each slave server. One example application involves the distribution of configuration information from an Admin server to a collection of managed servers.

In one system in accordance with the present invention, it may be necessary for a service, such as a Data Replication Service (DRS), to distribute configuration and deployment information from an Admin Server to managed servers in the appropriate domain. Large data items can be distributed over point-to-point connections, such as Transmission Control Protocol ("TCP"), since a multicast protocol like User Datagram Protocol ("UDP") does not have flow control, and can overwhelm the system. Remote Method Invocation (RMI), Hypertext Transfer Protocol (HTTP), or a similar protocol may be used for point-to-point connections.

Managed servers can also persistently cache data on local disks. Without such caching, an unacceptable amount of time may be required to transfer the necessary data. The ability of the managed servers to cache is important, as it increases the speed of startup by reducing the amount of startup data to be transferred. Caching can also allow startup and/or restart if the Admin Server is unreachable. Restart may be a more attractive option, and it may be the case that the Admin server directs a server to start. Caching, however, can provide the ability to start the domain without the Admin Server being available.

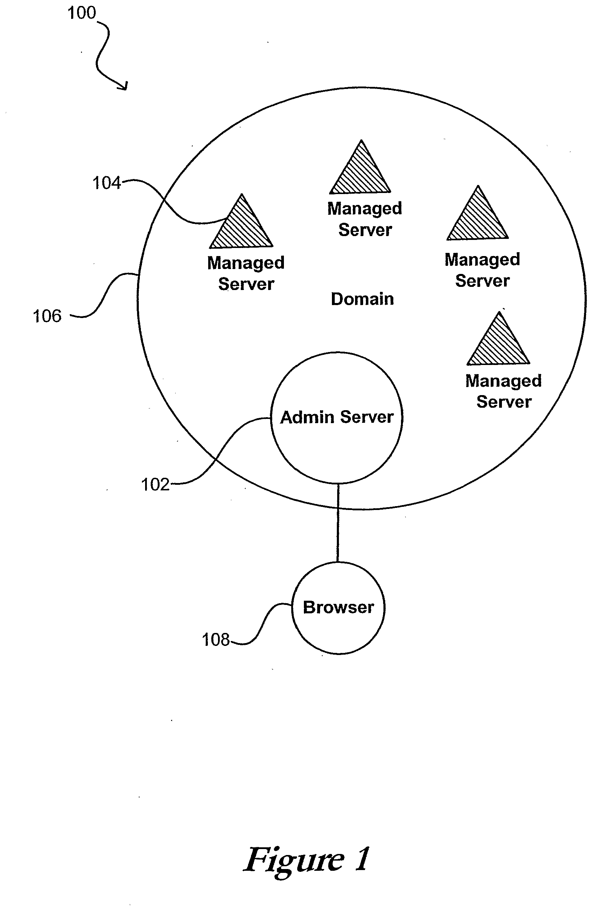

As shown in the domain structure **100** of **Figure 1****,** an Admin Server **102** and at least one managed server **104** can comprise a domain **106.** This domain **106** can be the administration unit for startup and shutdown. In one embodiment, a browser **108,** or other user application or device, tells the Admin Server **102** to start. The Admin Server **102** then tells all managed servers **104** in the domain **106** to start, and passes the appropriate configuration information. If a server goes down after the managed servers **104** have started, it may be desirable for that server to restart automatically, whether or not the Admin Server **102** is available. Cached data can be useful for this purpose.

Updates to data on the Admin Server can be packaged as incremental deltas between versions. The deltas can contain configuration and/or other information to be changed. It may be preferable to update the configuration while the domain is running, as it may be undesirable to take the system offline. In one embodiment, the configuration changes happen dynamically, as they are pushed out by the Admin Server. Only the changes to the configuration are sent in the deltas, as it may be unnecessary, and unduly cumbersome, to send the full configuration each time.

A protocol in accordance with the present invention integrates two methods for the distribution of updates, although other appropriate methods may be used accordingly. These distribution methods may be referred to as a one-phase method and a two-phase method, and can provide a tradeoff between consistency and scalability. In a one-phase method, which may favor scalability, each slave can obtain and process updates at its own pace. Slaves can get updates from the master at different times, but can commit to the data as soon as it is received. A slave can encounter an error in processing an update, but in the one-phase method this does not prevent other slaves from processing the update.

In a two-phase method in accordance with the present invention, which may favor consistency, the distribution can be "atomic", in that either all or none of the slaves successfully process the data. There can be separate phases, such as prepare and commit phases, which can allow for a possibility of abort. In the prepare phase, the master can determine whether each slave can take the update. If all slaves indicate that they can accept the update, the new data can be sent to the slaves to be committed in the commit phase. If at least one of the slave servers cannot take the update, the update can be aborted and there may not be a commit. In this case, the managed servers can be informed that they should roll back the prepare and nothing is changed. Such a protocol in accordance with the present invention is reliable, as a slave that is unreachable when an update is committed, in either method, eventually gets the update.

A system in accordance with the present invention can also ensure that a temporarily unavailable server eventually receives all updates. For example, a server may be temporarily isolated from the network, then come back into the network without restarting. Since the server is not restarting, it normally will not check for updates. The server coming back into the network can be accounted for by having the server check periodically for new updates, or by having a master server check periodically to see whether the servers have received the updates.

In one embodiment, a master server regularly sends multicast "heartbeats" to the slave servers. Since a multicast approach can be unreliable, it is possible for a slave to miss arbitrary sequences of heartbeats. For instance, a slave server might be temporarily disconnected from the network due to a network partitioning, or the slave server itself might be temporarily unavailable to the network due, causing a heartbeat to be missed. Heartbeats can therefore contain a window of information about recent updates. Such information about previous updates may be used to reduce the amount of network traffic, as explained below.

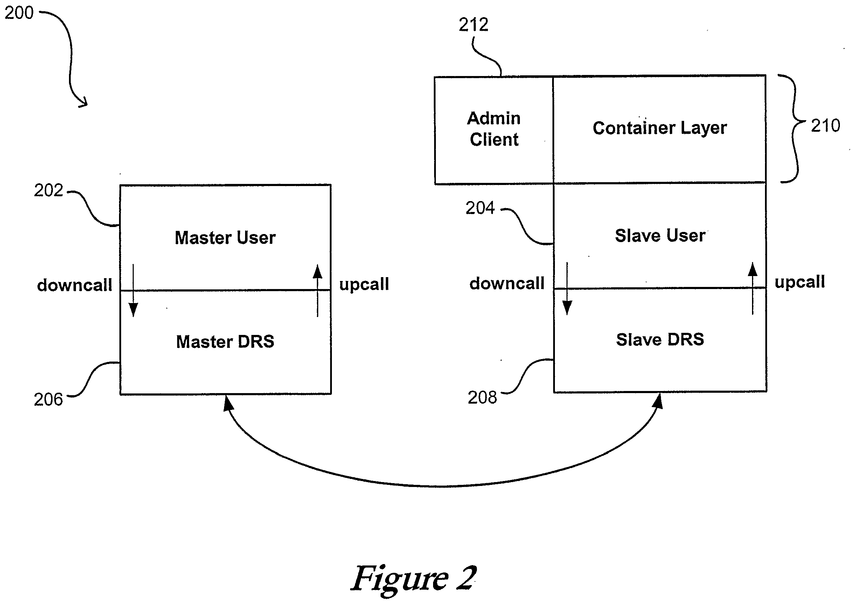

There can be at least two layers within each master and each slave: a user layer and a system layer (or DRS layer). The user layer can correspond to the user of the data replication system. A DRS layer can correspond to the implementation of the data replication system itself. The interaction of these participants and layers is shown in **Figure 2****.**

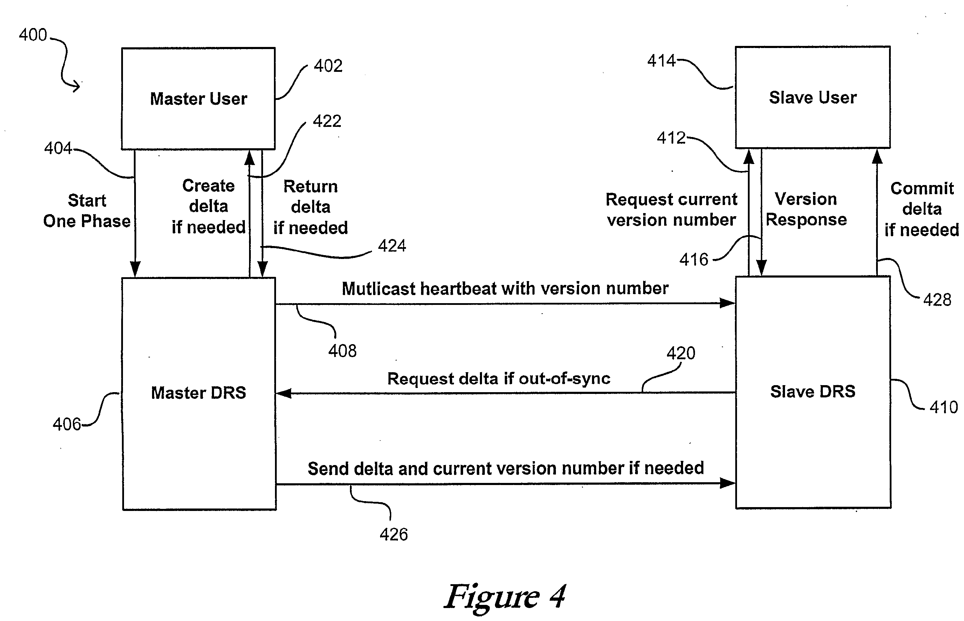

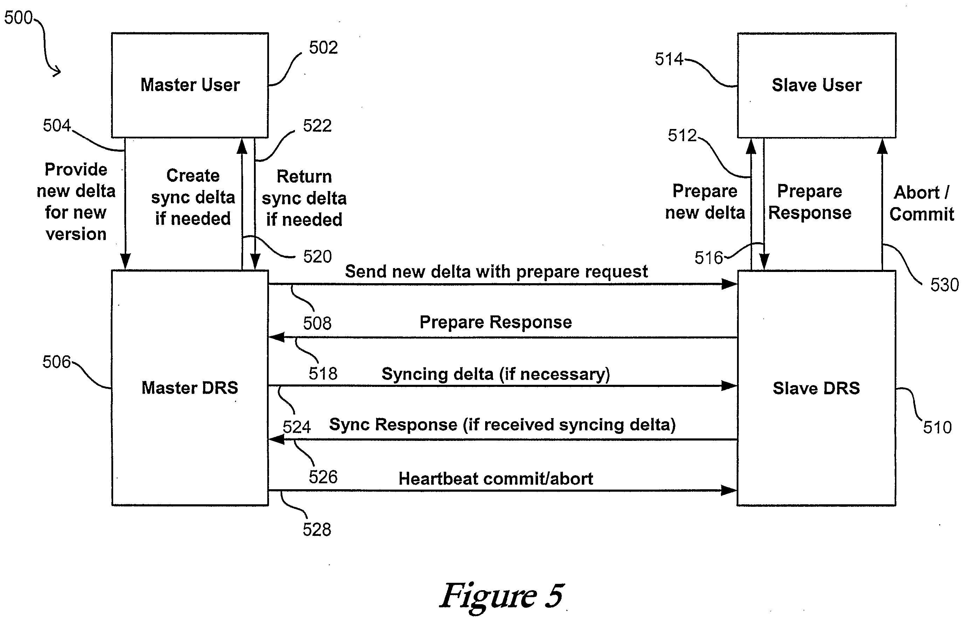

As shown in the startup diagram **200** of **Figure 2****,** the master user **202** and slave user **204** layers in this embodiment make downcalls into the master DRS **206** and slave DRS **208** layers, respectively. Such downcalls can, for example, take the form of:
*registerMaster(DID, verNum, listener)*
*registerSlave(DID, verNum, listener)*
where *DID* is an identifier taken from knowledge of well-known DIDs and refers to the object of interest, *verNum* is taken from the local persistent store as the user's current version number, and *listeneris* an object that will handle upcalls from the DRS layer. The upcall can call a method on the listener object. The master can then begin to send heartbeats, or periodic deltas, with the current version number. A container layer **210** is shown, which can include containers adapted to take information from the slave user**204**. Examples of possible containers include enterprise Java beans, web interfaces, and J2EE (Java 2 Platform, Enterprise Edition) applications. Other applications and/or components can plug into the container layer **210,** such as an administration client **212.** Examples of update messaging between the User and DRS layers are shown for the one phase method in **Figure 4****,** as well as for the two phase method in **Figure 5****.**

**Figure 4** shows one basic process **400** that may be used for a one-phase distribution approach in a layered architecture in accordance with the present invention. In this process, the master user layer **402** makes a downcall **404** into the master DRS layer **406** to start a one phase distribution. This call can be to all slaves in the system, or only to a subset of slave servers. If the call is to a subset, the master user layer **402** can determine the scope of the update, or which slaves should receive the update.

The master DRS layer begins multicasting heartbeats **408,** containing the current version number of the data on the master, to the slave DRS layer **410.** The slave DRS layer **410** requests the current version number **412** for the slave from the slave user layer **414.** The slave user layer **414** then responds **416** to the slave DRS layer **416** with the slave version number. If the slave is in sync, or already is on the current version number, then no further requests may be made until the next update. If the slave is out-of-sync and the slave is in the scope of the update, the slave DRS layer **410** can request a delta **420** from the master DRS layer **406** in order to update the slave to the current version number of the data on the master. The master DRS layer **406** requests **422** that the master user layer **402** create a delta to update the slave. The master user layer **402** then sends the delta **424** to the master DRS layer **406,** which forwards the delta **426** and the current version number of the master to the slave DRS layer **410,** which sends the delta **426** to the slave user to be committed. The current version number is sent with the delta in case the master has updated since the heartbeat **408** was received by the slave.

The master DRS layer **406** can continue to periodically send a multicast heartbeat containing the version number **408** to the slave server(s). This allows any slave that was unavailable, or unable to receive and process a delta, to determine that it is not on the current version of the data and request a delta **420** at a later time, such as when the slave comes back into the system.

**Figure 5** shows one basic process **500** that may be used for a two phase distribution approach in a layered architecture in accordance with the present invention. In this process, the master user layer **504** makes a downcall **504** into the master DRS layer **506** to start a two phase distribution. The master user layer **502** may again need to determine the scope of the update, and may set a "timeout" value for the update process.

The master DRS layer **506** sends the new delta **508** to the slave DRS layer **510.** The slave DRS layer **510** sends a prepare request **512** to the slave user layer **514** for the new delta. The slave user layer **514** then responds **516** to the slave DRS layer **510** whether or not the slave can process the new delta. The slave DRS layer forwards the response **518** to the master DRS layer **506.** If the slave cannot process the request because it is out-of-sync, the master DRS layer **506** makes an upcall **520** to the master user layer **502** to create a delta that will bring the slave in sync to commit the delta. The master user layer **502** sends the syncing delta **522** to the master DRS layer, which forwards the syncing delta **524** to the slave DRS layer **510.** If the slave is able to process the syncing delta, the slave DRS layer **510** will send a sync response **526** to the master DRS layer **506** that the slave can now process the new delta. If the slave is not able to process the syncing delta, the slave DRS layer **510** will send the appropriate sync response **526** to the master DRS layer **506.** The master DRS layer **506** then heartbeats a commit or abort message **528** to the slave DRS layer **510,** depending on whether or not the slave responded that it was able to process the new delta. If all slave were able to prepare the delta, for example, the master can heartbeat a commit signal. Otherwise, the master can heartbeat an abort signal. The heartbeats also contains the scope of the update, such that a slave knows whether or not it should process the information contained in the heartbeat.

The slave DRS layer forwards this command **530** to the slave user layer **514,** which then commits or aborts the update for the new delta. If the prepare phase was not completed within a timeout value set by the master user layer **502,** the master DRS layer **506** can automatically heartbeat an abort **528** to all the slaves. This may occur, for example, when the master DRS layer **506** is unable to contact at least one of the slaves to determine whether that slave is able to process the commit. The timeout value can be set such that the master DRS layer **506** will try to contact the slave for a specified period of time before aborting the update.

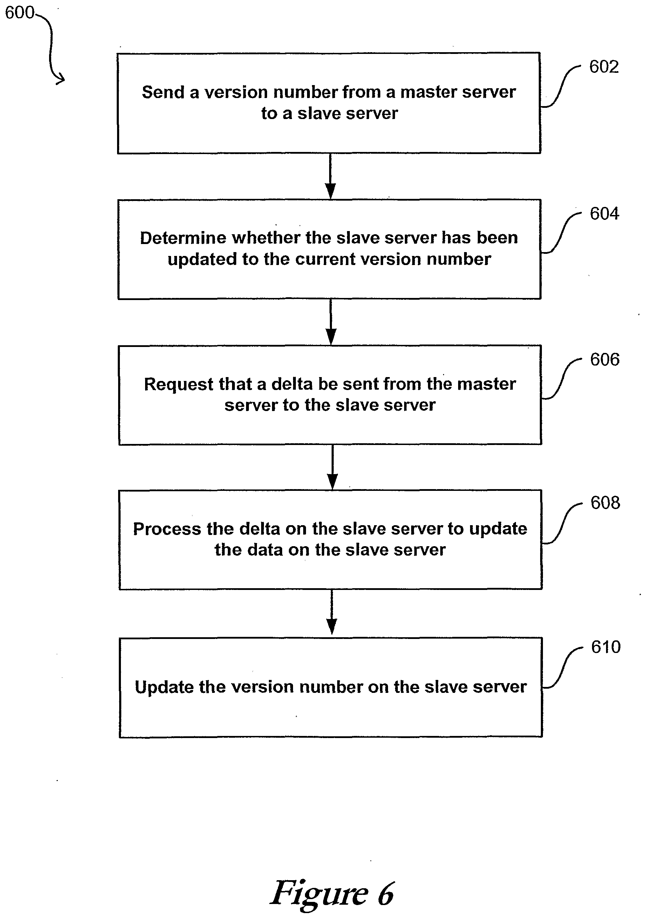

For an update in a one-phase method, these heartbeats can cause each slave to request a delta starting from the slave's current version of the data. Such a process is shown in the flowchart of **Figure 6****.** In this basic process **600,** which may or may not utilize a layered architecture in accordance with the present invention, a version number for the current data on the master server is sent from a master server to a slave server **602.** The slave server determines whether it has been updated to the current version number **604.** If the slave is not on the current version, it will request that a delta be sent from the master server to update the slave server **606.** When the delta is sent to the slave server, the slave server will process the delta in order to update the slave data to the current version **608.** The slave server will then update its version number to the current version number **610.**

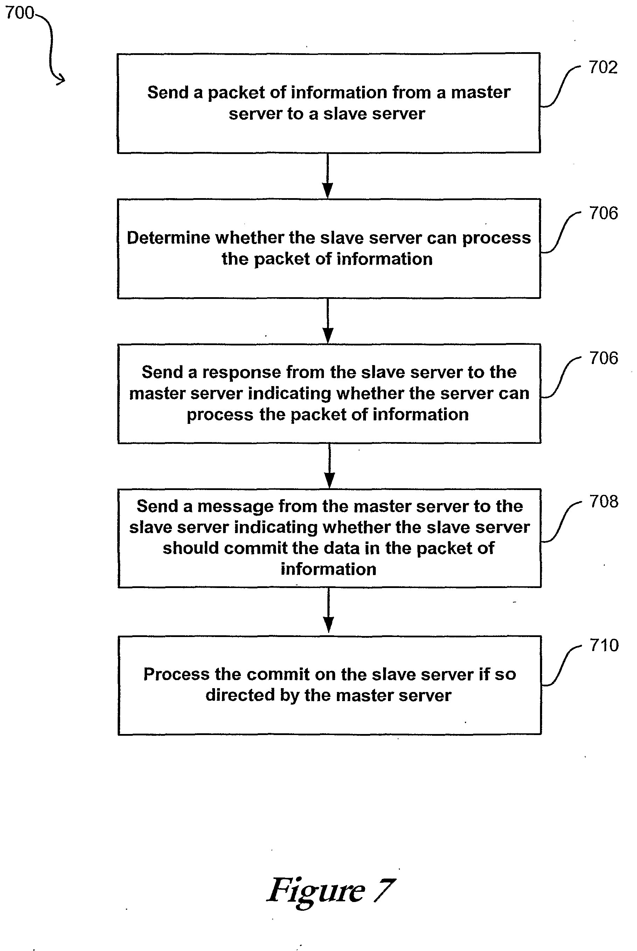

For an update in a two-phase method, the master can begin with a prepare phase in which it pro-actively sends each slave a delta from the immediately-previous version. Such a process is shown in the flowchart of **Figure 7****.** In this basic process **700,** which may or may not utilize a layered architecture in accordance with the present invention, a packet of information is sent from the master to a slave server or slave servers **702.** Each slave server receiving the packet determines whether it can process that packet and update to the current version **704.** Each slave server receiving the packet responds to the master server, indicating whether the slave server can process the packet **706.** If all slaves (to which the delta is sent) acknowledge successful processing of the delta within some timeout period, the master may decide to commit the update. Otherwise, the master server may decide to abort the update. Once this decision is made, the master server sends a message to the slave server(s) indicating whether the update should be committed or aborted **708.** If the decision is to commit, each server processes the commit **710.** Heartbeats may further be used to signal whether a commit or abort occurred, in case the command was missed by one of the slaves.

A slave can be configured to immediately start and/or restart using cached data, without first getting the current version number from the master. As mentioned above, one protocol in accordance with the present invention allows slaves to persistently cache data on local disks. This caching decreases the time needed for system startup, and improves scalability by reducing the amount of data needing to be transferred. The protocol can improve reliability by allowing slaves to startup and/or restart if the master is unreachable, and may further allow updates to be packaged as incremental deltas between versions. If no cache data exists, the slave can wait for the master or can pull the data itself. If the slave has the cache, it may still not want to start out of sync. Startup time may be decreased if the slave knows to wait.

The protocol can be bilateral, in that a master or slave can take the initiative to transfer data, depending upon the circumstances. For example, a slave can pull a delta from the master during domain startup. When the slave determines it is on a different version than the delta is intended to update, the slave can request a delta from its current version to the current system version. A slave can also pull a delta during one-phase distribution. Here, the system can read the heartbeat, determine that it has missed the update, and request the appropriate delta.

A slave can also pull a delta when needed to recover from exceptional circumstances. Exceptional circumstances can exist, for example, when components of the system are out of sync. When a slave pulls a delta, the delta can be between arbitrary versions of the data. In other words, the delta can be between the current version of the slave and the current version of the system (or domain), no matter how many iterations apart those versions might be. In this embodiment, the availability of a heartbeat and the ability to receive deltas can provide synchronization of the system.

In addition to the ability of a slave to pull a delta, a master can have the ability to push a delta to a slave during two-phase distribution. In one embodiment, these deltas are always between successive versions of the data. This two-phase distribution method can minimize the likelihood of inconsistencies between participants. Slave users can process a prepare as far as possible without exposing the update to clients or making the update impossible to roll back. This can include such tasks as checking the servers for conflicts. If any of the slaves signals an error, such as by sending a "disk full" or "inconsistent configuration" message, the update can be uniformly rolled back.

It is still possible, however, that inconsistencies may arise. For instance, there may be errors in processing a commit, for reasons such as an inability to open a socket. Servers can also commit and expose the update at different times. Because the data cannot reach every managed server at exactly the same time, there can be some rippling effect. The use of multicasting can provide for a small time window, in an attempt to minimize the rippling effect. In one embodiment, a prepared slave will abort if it misses a commit, whether it missed the signal, the master crashed, etc.

A best-effort approach to multicasting can cause a slave server to miss a commit signal. If a master crashes part way through the commit phase, there may be no logging or means for recovery. There may be no way for the master to tell the remaining slaves that they need to commit. Upon abort some slaves may end up committing the data if the version is not properly rolled back. In one embodiment, the remaining slaves could get the update using one-phase distribution. This might happen, for example, when a managed server pulls a delta in response to a heartbeat received from an Admin server. This approach may maintain system scalability, which might be lost if the system tied down distribution in order to avoid any commit or version errors.

Each data item managed by the system can be structured to have a unique, long-lived domain identifier (DID) that is well-known across the domain. A data item can be a large, complex object made up of many components, each relevant to some subset of the servers in the domain. Because these objects can be the units of consistency, it may be desirable to have a few large objects, rather than several tiny objects. As an example, a single data item or object can represent all configuration information for a system, including code files such as a config.xml file or an applicaiton-EAR file. A given component in the data item can, for example, be relevant to an individual server as to the number of threads, can be relevant to a cluster as to the deployed services, or can be relevant to the entire domain regarding security certificates. A delta between two versions can consist of new values for some or all of these components. For example, the components may include all enterprise Java beans deployed on members of the domain. A delta may include changes to only a subset of these Java beans.

The "scope" of a delta can refer to the set of all servers with a relevant component in the delta. An Admin server in accordance with the present invention may be able to interpret a configuration change in order to determine the scope of the delta. The DRS system on the master may need to know the scope in order to send the data to the appropriate slaves. It might be a waste of time and resources to send every configuration update to every server, when a master may only need to only touch a subset of servers in each update.

To control distribution, the master user can provide the scope of each update along with the delta between successive versions. A scope may be represented as a set of names, referring to servers and/or clusters, which may be taken from the same namespace within a domain. In one embodiment, the DRS uses a resolver module to map names to addresses. A cluster name can map to the set of addresses of all servers in that cluster. These addresses can be relative, such as to a virtual machine. The resolver can determine whether there is an intervening firewall, and return either an "inside" or "outside" address, relating to whether the server is "inside the firewall" as is known and used in the art. An Admin server or other server can initialize the corresponding resolver with configuration data.

Along with the unique, long-lived domain identifier (DID) for each managed data item, each version of a data item can also have a long-lived version number. Each version number can be unique to an update attempt, such that a server will not improperly update or fail to update due to confusion as to the proper version. Similarly, the version number for an aborted two-phase distribution may not be re-used. The master may be able to produce a delta between two arbitrary versions given just the version numbers. If the master cannot produce such a delta, a complete copy of the data or application may be provided.

It may be desirable to keep the data replication service as generic as possible. A few assumptions may therefore be imposed upon the users of the system. The system may rely on, for example, three primary assumptions:
- the system may include a way to increment a version number
- the system may persistently store the version number on the master as well as the slave
- the system may include a way to compare version numbers and determine equality
These assumptions may be provided by a user-level implementation of a DRS interface, such as an interface "VersionNumber." Such an interface may allow a user to provide a specific notion and implementation of the version number abstraction, while ensuring that the system has access to the version number attributes. In Java, for example, a VersionNumber interface may be implemented as follows:

```
      package weblogic.drs;
      public interface VersionNumber extends Serializable {
        VersionNumber increment();
        void persist() throws Exception;
        boolean equals(VersionNumber anotherVN);
        boolean strictlyGreaterThan(VersionNumber anotherVN);
      }
```

A simplistic implementation of this abstraction that a user could provide to the system would be a large, positive integer. The implementation may also ensure that the system can transmit delta information via the network from the master to the slaves, referred to in the art as being "serializable."

If using the abstraction above, it may be useful to abstract from a notion of the detailed content of a delta at the user level. The system may require no knowledge of the delta information structure, and in fact may not even be able to determine the structure. The implementation of the delta can also be serializable, ensuring that the system can transmit delta version information via the network from the master to the slaves.

It may be desirable to have the master persistently store the copy of record for each data item, along with the appropriate DID and version number. Before beginning a two-phase distribution, the master can persistently store the proposed new version number to ensure that it is not reused, in the event the master fails. A slave can persistently store the latest copy of each relevant data item along with its DID and version number. The slave can also be configured to do the necessary caching, such that the slave may have to get the data or protocol every time. This may not be desirable in all cases, but may be allowed in order to handle certain situations that may arise.

A system in accordance with the present invention may further include concurrence restrictions. For instance, certain operations may not be permitted during a two-phase distribution of an update for a given DID over.a given scope. Such operations may include a one- or two-phase update, such as a modification of the membership of the scope on the same DID, over a scope with a non-empty intersection.

In at least one embodiment, the master DRS regularly multicasts heartbeats, or packets of information, to the slave DRS on each server in the domain. For each DID, a heartbeat may contain a window of information about the most recent update(s), including each update version number, the scope of the delta with respect to the previous version, and whether the update was committed or aborted. Information about the current version may always be included. Information about older versions can also be used to minimize the amount of traffic back to the master, and not for correctness or liveness.

With the inclusion of older version information in a delta, the slave can commit that portion of the update it was expecting upon the prepare, and ask for a new delta to handle more recent updates. Information about a given version can be included for at least some fixed, configurable number of heartbeats, although rapid-fire updates may cause the window to increase to an unacceptable size. In another embodiment, information about an older version can be discarded once a master determines that all slaves have received the update.

Multicast heartbeats may have several properties to be taken into consideration. These heartbeats can be asynchronous or "one-way". As a result, by the time a slave responds to a heartbeat, the master may have advanced to a new state. Further, not all slaves may respond at exactly the same time. As such, a master can assume that a slave has no knowledge of its state, and can include that which the delta is intended to update. These heartbeats can also be unreliable, as a slave may miss arbitrary sequences of heartbeats. This can again lead to the inclusion of olderversion information in the heartbeats. In one embodiment, heartbeats are received by a slave in the order they were sent. For example, a slave may not commit version seven until it has committed version six. The server may wait until it receives six, or it may simply throw out six and commit seven. This ordering may eliminate the possibility for confusion that might be created by versions going backwards.

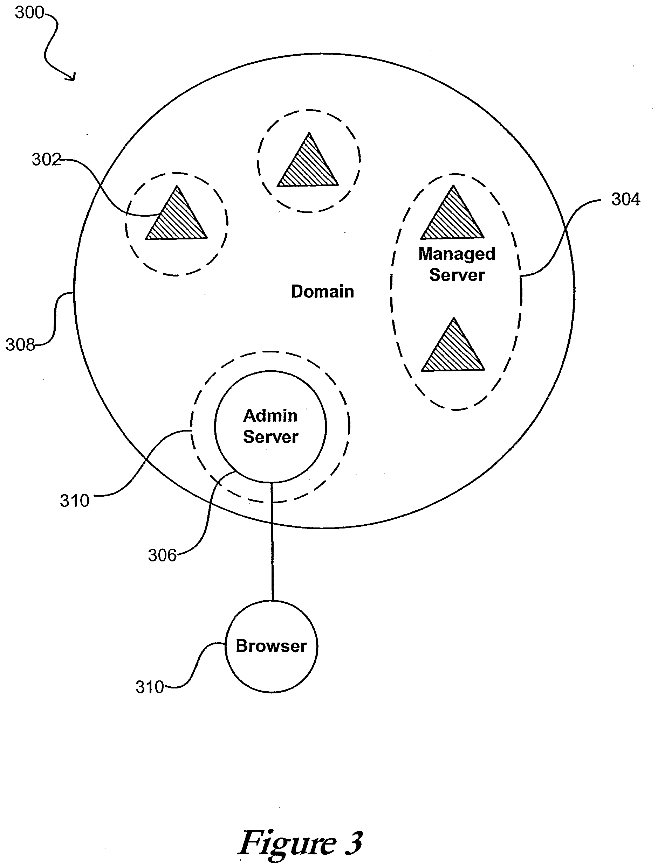

As mentioned above, the domains may also utilize clustering, as shown in Figure 3 (Properties of Multicast Heartbeats slide). The general network topology for this embodiment is a collection of multicast islands, connected to a hub island containing the master. Multicast traffic may be forwarded point-to-point outward from the hub. Small deltas that may be distributed in the one-phase method may be directly transmitted over multicast. In all other cases, deltas may be transmitted over point-to-point links. A tree-structured, point-to-point forwarding scheme may be overlaid on the hub-and-spoke multicast structure to reduce the bottleneck at the master.

In the domain diagram **300** of **Figure 3****,** one or more of the managed servers **302** can be grouped into a multicast island, also referred to as a cluster **304.** An Admin server **306** for the domain **308** acts as the master of the hub island **312,** and is the entry point to the domain, such as through a browser **310.** The Admin server **306** contacts one of the managed servers in the cluster, referred to as the cluster master. The Admin server in this embodiment can multicast a delta or message to each cluster master, with each cluster master then forwarding that delta or message by multicast to the other managed servers in that cluster. The cluster masters may not own any configuration information, instead receiving the information from the Admin server. In the event that a cluster master goes offline or crashes, another managed server in the domain may take over as cluster master. In this event, a mechanism may be put in place to prevent the offline server from coming back into the cluster as a second cluster master. This may be handled by the cluster or system infrastructure.

There can also be more than one domain. In this case, there can be nested domains or "syndicates." Information can be spread to the domain masters by touching each domain master directly, as each domain master can have the ability to push information to the other domain masters. It may, however, be undesirable to multicast to domain masters.

In one-phase distribution, a master usercan make a downcall in order to trigger the distribution of an update. Such a downcall can take the form of:
*startOnePhase(DID, newVerNum, scope)*
where *DID* is the ID of the data item or object that was updated, *newVerNum* is the new version number of the object, and *scope* is the scope to which the update applies. The master DRS may respond by advancing to the new version number, writing the new number to disk, and including the information in subsequent heartbeats.

When a slave DRS receives a heartbeat, it can determine whether it needs a pull by analyzing the window of information relating to recent updates of interest. If the slave's current version number is within the window and the slave is not in the scope of any of the subsequent committed updates, it can simply advance to the latest version number without pulling any data. This process can include the trivial case where the slave is up-to-date. Otherwise, the slave DRS may make a point-to-point call for a delta from the master DRS, or another similar request, which may take the form of:
*createDelta(DID, curVerNum)*
where *curVerNum* is the current number of the slave, which will be sent back to the domain master or cluster master. To handle this request, the master DRS may make an upcall, such as *createDelta(curVerNum).* This upcall may be made through the appropriate listener in order to obtain the delta and the new version number, and return them to the slave DRS. The new version number should be included, as it may have changed since the slave last received the heartbeat. The delta may only be up to the most recently committed update. Any ongoing two-phase updates may be handled through a separate mechanism. The slave DRS may then make an upcall to the slave user, such as *commitOnePhase(newVerNum, delta)* and then advance to the new version number.

In order to trigger a two-phase update distribution, the master user can make a downcall, such as *startTwoPhase(DID, oldVerNum, newVerNum, delta, scope, timeout),* where *DID* is the ID of the data item or object to be updated, *oldVerNum* is the previous version number, *newVerNum* is the new version number (one step from the previous version number), *delta* is the delta between the successive versions to be pushed, *scope* is the scope of the update, and *timeout* is the maximum time-to-live for the job. Because the "prepare" and "commit" are synchronous, it may be desirable to set a specific time limit for the job. The previous version number may be included to that a server on a different version number will not take the delta.

The master DRS in one embodiment goes through all servers in the scope and makes a point-to-point call to each slave DRS, such as *prepareTwoPhase(DID, oldVerNum, newVerNum, delta, timeout).* The slave can then get the appropriate timeout value. Point-to-point protocol can be used where the delta is large, such as a delta that includes binary code. Smaller updates, which may for example include only minor configuration changes such as modifications of cache size, can be done using the one-phase method. This approach can be used because it may be more important that big changes like application additions get to the servers in a consistent fashion. The master can alternatively go to cluster masters, if they exist, and have the cluster masters make the call. Having the master proxy to the cluster masters can improve system scalability.

In one embodiment, each call to a slave or cluster master produces one of four responses, such as "Unreachable", "OutOfSync", "Nak", and "Ack", which are handled by the master DRS. If the response is "Unreachable", the server in question cannot be reached and may be queued for retry. If the response is "OutOfSync", the server may be queued for retry. In the meantime, the server will attempt to sync itself by using a pull from the master, so that it may receive the delta upon retry. If the response is "NoAck", or no acknowledgment, the job is aborted. This response may be given when the server cannot accept the job. If the response is "Ack", no action is taken.

In order to prepare the slaves, a master DRS can call a method such as *prepareTwoPhase.* Upon receiving a "prepare" request from the master DRS, the slave DRS can first check whether its current version number equals the old version number to be updated. If not, the slave can return an "OutOfSync" response. The slave can then pull a delta from the master DRS as if it had just received a heartbeat. Eventually, the master DRS can retry the *prepareTwoPhase.* This approach may be more simple than having the master push the delta, but may require careful configuration of the master. The configuring of the master may be needed, as waiting too long for a response can cause the job to timeout. Further, not waiting long enough can lead to additional requests getting an "OutOfSync" response. It may be preferable to trigger the retry upon completion of the pull request from the slave.

If the slave is in sync, the slave can make an upcall to the client layer on the slave side, as deep into the server as possible, such as *prepareTwoPhase(newVerNum, delta).* The resulting "Ack" or "Nak" that is returned can then be sent to the master DRS. If the response was an "Ack", the slave can go into a special prepared state. If the response was a "Nak", the slave can flush any record of the update. If it were to be later committed for some reason, the slave can obtain it as a one-phase distribution, which may then fail.

If the master DRS manages to collect an "Ack" from every server within the timeout period, it can make a commit upcall, such as *twoPhaseSucceeded(newVerNum),* and advance to the new version number. If the master DRS receives a "Nak" from any server, or if the timeout period expires, the master DRS can make an abort upcall, such as *twoPhaseFailed(newVerNum, reason),* and leave the version number unchanged. Here, *reason* is an exception, containing a roll-up of any "Nak" responses. In both cases, the abort/commit information can be included in subsequent heartbeats.

At any time, the master DRS can make a cancel downcall, such as *cancelTwoPhase(newVerNum).* The master DRS can then handle this call by throwing an exception, if the job is not in progress, or acting as if an abort is to occur.

If a prepared slave DRS gets a heartbeat indicating the new version was committed, the slave DRS can make an upcall, such as *commitTwoPhase(newVerNum),* and advance to the new version number. If a prepared slave DRS instead gets a heartbeat indicating the new version was aborted, the slave can abort the job. The slave can also abort the job when the slave gets a heartbeat where the window has advanced beyond the new version, the slave gets a new prepareTwoPhase call on the same data item, or the slave times out the job. In such a case, the slave can make an upcall, such as *abortTwoPhase(newVerNum),* and leave the version number unchanged. This is one way to ensure the proper handling of situations such as where a master server fails after the slaves were prepared but before the slaves commit.

The foregoing description of preferred embodiments of the present invention has been provided for the purposes of illustration and description. It is not intended to be exhaustive or to limit the invention to the precise forms disclosed. Obviously, many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims.

## Claims

1. A system for replicating data over a network from a master server to a plurality of slave servers, the system comprising:
a master server containing an original copy of the data, said master server comprising:
a master user layer (202) adapted to start a data replication process by calling a start method, the master user layer further adapted to send information relating to the original copy of the data to a master service layer (206), wherein the information relating to the original copy of the data is in the form of a delta, the delta containing information relating to changes between a previous state and the current state of the original copy of the data;
and a master service layer containing the start method and adapted to receive the call from the master user layer and the information relating to the original copy of the data, the master service layer further adapted to create and send a data replication packet containing at least some of the information relating to the original copy of the data to respective slave service layers (208) of the plurality of slave servers;
the system further comprising:
a slave server adapted to store a copy of the data from the master server, the slave server comprising:
a slave service layer adapted to receive the data replication packet from the master service layer and process the data replication packet, the slave service layer further adapted to send information relating to the data replication packet to a slave user layer (204); and
a slave user layer adapted to receive the information relating to the data replication packet from the slave service layer, the slave user layer adapted to signal a response to the master server if the slave server cannot process the information in the data replication packet, and to store the information in the data replication packet;
wherein said master user layer is adapted to send a roll-back message to each of the plurality of slave servers indicating that a change to the original copy of the data should not be replicated on the slave servers if a response is received from one or more of the plurality of slave servers indicating that the information in the data replication packet cannot be processed.

2. A system according to claim 1, wherein said master user layer is adapted to set a timeout value for the replication.

3. A system according to claim 1, wherein said master user layer is adapted to create information relating to changes between the present state of the original copy of the data and the prior state of the original copy of the data.

4. A system according to claim 1, wherein said master user layer is adapted to create information relating to changes between the present state of the original copy of the data and a previous state of the original copy of the data.

5. A system according to claim 1, wherein said master user layer is adapted to generate a unique version number for each state of the original copy of the data.

6. A system according to claim 1, wherein said master service layer is adapted to multicast the data replication packet.

7. A system according to claim 1, wherein said master service layer is adapted to heartbeat the data replication packet.

8. A system according to claim 1, wherein said master service layer is adapted to include a version number in the data replication packet.

9. A method for replicating data over a network comprising a master server containing an original copy of the data, said master server comprising a master user layer (202) and a master service layer, and a plurality of slave servers each comprising a slave user layer and a slave service layer, the method comprising:
the master user layer (202) starting a data replication process by calling a start method, the master user layer further sending information relating to the original copy of the data to a master service layer (206), wherein the information relating to the original copy of the data is in the form of a delta, the delta containing information relating to changes between a previous state and the current state of the original copy of the data;
the master service layer containing the start method and receiving the call from the master user layer and the information relating to the original copy of the data, the master service layer further creating and sending a data replication packet containing at least some of the information relating to the original copy of the data to respective slave service layers (208) of the plurality of slave servers;
the slave service layer receiving the data replication packet from the master service layer and processing the data replication packet, the slave service layer further sending information relating to the data replication packet to a slave user layer (204); and
the slave user layer receiving the information relating to the data replication packet from the slave service layer, the slave user layer signaling a response to the master server if the slave server cannot process the information in the data replication packet, and storing the information in the data replication packet;
and wherein the method comprises sending, from the master user layer to each of the plurality of slave servers, a roll-back message indicating that a change to the original copy of the data should not be replicated on the slave servers, if a response is received from one or more of the plurality of slave servers indicating that the information in the data replication packet cannot be processed.

## Patentansprüche

1. System zum Replizieren von Daten über ein Netzwerk von einem übergeordneten Server zu einer Vielzahl von untergeordneten Servern, das System umfassend:
einen übergeordneten Server, enthaltend ein ursprüngliches Exemplar der Daten, der übergeordnete Server umfassend:
eine übergeordnete Benutzerschicht (202), angepasst zum Starten eines Datenreplikationsprozesses durch Aufrufen eines Startverfahrens, wobei die übergeordnete Benutzerschicht ferner angepasst ist zum Senden von Informationen bezüglich des ursprünglichen Exemplars der Daten an eine übergeordnete Dienstschicht (206), wobei die Informationen bezüglich des ursprünglichen Exemplars der Daten in der Form eines Deltas sind, das Delta enthaltend Informationen bezüglich Veränderungen zwischen einem vorherigen Zustand und dem gegenwärtigen Zustand des ursprünglichen Exemplars der Daten; und
eine übergeordnete Dienstschicht, enthaltend das Startverfahren und angepasst zum Empfangen des Aufrufs von der übergeordneten Benutzerschicht und der Informationen bezüglich des ursprünglichen Exemplars der Daten, wobei die übergeordnete Dienstschicht ferner angepasst ist zum Erzeugen und Senden eines Datenreplikationspakets, enthaltend mindestens einige der Informationen bezüglich des ursprünglichen Exemplars der Daten, an jeweilige untergeordnete Dienstschichten (208) der Vielzahl von untergeordneten Servern;
das System ferner umfassend:
einen untergeordneten Server, angepasst zum Speichern eines Exemplars der Daten von dem übergeordneten Server, der untergeordnete Server umfassend:
eine untergeordnete Dienstschicht, angepasst zum Empfangen des Datenreplikationspakets von der übergeordneten Dienstschicht und zum Verarbeiten des Datenreplikationspakets, wobei die untergeordnete Dienstschicht ferner angepasst ist zum Senden von Informationen bezüglich des Datenreplikationspakets an eine untergeordnete Benutzerschicht (204); und
eine untergeordnete Benutzerschicht, angepasst zum Empfangen der Informationen bezüglich des Datenreplikationspakets von der untergeordneten Dienstschicht, wobei die untergeordnete Benutzerschicht angepasst ist zum Signalisieren einer Antwort an den übergeordneten Server, wenn der untergeordnete Server die Informationen in dem Datenreplikationspaket nicht verarbeiten kann, und zum Speichern der Informationen in dem Datenreplikationspaket;
wobei die übergeordnete Benutzerschicht angepasst ist zum Senden einer Roll-Back-Nachricht an jeden der Vielzahl von untergeordneten Servern, die angibt, dass eine Änderung des ursprünglichen Exemplars der Daten nicht in den untergeordneten Servern repliziert werden sollte, wenn eine Antwort von einem oder mehreren der Vielzahl von untergeordneten Servern empfangen wird, die angibt, dass die Informationen in dem Datenreplikationspaket nicht verarbeitet werden können.

2. System nach Anspruch 1, wobei die übergeordnete Benutzerschicht angepasst ist, einen Zeitablaufwert für die Replikation einzustellen.

3. System nach Anspruch 1, wobei die übergeordnete Benutzerschicht angepasst ist, Informationen bezüglich von Änderungen zwischen dem gegenwärtigen Zustand des ursprünglichen Exemplars der Daten und dem früheren Zustand des ursprünglichen Exemplars der Daten zu erzeugen.

4. System nach Anspruch 1, wobei die übergeordnete Benutzerschicht angepasst ist, Informationen bezüglich von Änderungen zwischen dem gegenwärtigen Zustand des ursprünglichen Exemplars der Daten und einem vorherigen Zustand des ursprünglichen Exemplars der Daten zu erzeugen.

5. System nach Anspruch 1, wobei die übergeordnete Benutzerschicht angepasst ist, eine eindeutige Versionsnummer für jeden Zustand des ursprünglichen Exemplars der Daten zu erzeugen.

6. System nach Anspruch 1, wobei die übergeordnete Dienstschicht angepasst ist, das Datenreplikationspaket rundzusenden.

7. System nach Anspruch 1, wobei die übergeordnete Dienstschicht angepasst ist, das Datenreplikationspaket zu takten.

8. System nach Anspruch 1, wobei die übergeordnete Dienstschicht angepasst ist, eine Versionsnummer in das Datenreplikationspaket aufzunehmen.

9. Verfahren zum Replizieren von Daten über ein Netzwerk, umfassend einen übergeordneten Server, enthaltend ein ursprüngliches Exemplar der Daten, der übergeordnete Server umfassend eine übergeordnete Benutzerschicht (202) und eine übergeordnete Dienstschicht und eine Vielzahl von untergeordneten Servern, die jeweils eine untergeordnete Benutzerschicht und eine untergeordnete Dienstschicht umfassen, das Verfahren umfassend:
Starten, durch die übergeordnete Benutzerschicht (202), eines Datenreplikationsprozesses durch Aufrufen eines Startverfahrens, wobei die übergeordnete Benutzerschicht ferner Informationen bezüglich des ursprünglichen Exemplars der Daten an eine übergeordnete Dienstschicht (206) sendet, wobei die Informationen bezüglich des ursprünglichen Exemplars der Daten in der Form eines Deltas sind, das Delta enthaltend Informationen bezüglich Veränderungen zwischen einem vorherigen Zustand und dem gegenwärtigen Zustand des ursprünglichen Exemplars der Daten;
die übergeordnete Dienstschicht das Startverfahren enthält und den Aufruf von der übergeordneten Benutzerschicht und die Informationen bezüglich des ursprünglichen Exemplars der Daten empfängt, wobei die übergeordnete Dienstschicht ferner ein Datenreplikationspaket, das mindestens einige der Informationen bezüglich des ursprünglichen Exemplars der Daten enthält, erzeugt und an jeweilige untergeordnete Dienstschichten (208) der Vielzahl von untergeordneten Servern sendet;
die untergeordnete Dienstschicht das Datenreplikationspaket von der übergeordneten Dienstschicht empfängt und das Datenreplikationspaket verarbeitet, wobei die untergeordnete Dienstschicht ferner Informationen bezüglich des Datenreplikationspakets an eine untergeordnete Benutzerschicht (204) sendet; und
die untergeordnete Benutzerschicht die Informationen bezüglich des Datenreplikationspakets von der untergeordneten Dienstschicht empfängt, wobei die untergeordnete Benutzerschicht eine Antwort an den übergeordneten Server signalisiert, wenn der untergeordnete Server die Informationen in dem Datenreplikationspaket nicht verarbeiten kann, und die Informationen in dem Datenreplikationspaket speichert;
und wobei das Verfahren umfasst, eine Roll-Back-Nachricht von der übergeordneten Benutzerschicht an jeden der Vielzahl von untergeordneten Servern zu senden, die angibt, dass eine Veränderung des ursprünglichen Exemplars der Daten in den untergeordneten Servern nicht repliziert werden sollte, wenn eine Antwort von einem oder mehreren der Vielzahl von untergeordneten Servern empfangen wird, die angibt, dass die Informationen in dem Datenreplikationspaket nicht verarbeitet werden können.

## Revendications

1. Système de duplication de données sur un réseau depuis un serveur maître vers une pluralité de serveurs esclaves, le système comprenant :
un serveur maître incorporant une copie originale des données, ledit serveur maître comprenant :
une couche utilisateur maîtresse (202) adaptée à amorcer un processus de duplication de données par appel d'un procédé d'amorçage, la couche utilisateur maîtresse étant adaptée en outre à envoyer des informations relatives à la copie originale des données à une couche de service maîtresse (206), les informations relatives à la copie originale des données prenant la forme d'un delta, le delta incorporant des informations relatives à des changements entre un état précédent et l'état actuel de la copie originale des données ; et
une couche de service maîtresse incorporant le procédé d'amorçage et adaptée à recevoir l'appel depuis la couche utilisateur maîtresse et les informations relatives à la copie originale des données, la couche de service maîtresse étant adaptée en outre à créer et envoyer un paquet de duplication de données incorporant au moins certaines des informations relatives à la copie originale des données à des couches de service esclaves respectives (208) de la pluralité de serveurs esclaves ;
le système comprenant en outre :
un serveur esclave adapté à stocker une copie des données provenant du serveur maître, le serveur esclave comprenant :
une couche de service esclave adaptée à recevoir le paquet de duplication de données depuis la couche de service maîtresse et traiter le paquet de duplication de données, la couche de service esclave étant adaptée en outre à envoyer des informations relatives au paquet de duplication de données à une couche utilisateur esclave (204) ; et
une couche utilisateur esclave adaptée à recevoir les informations relatives au paquet de duplication de données depuis la couche de service esclave, la couche utilisateur esclave étant adaptée à signaler une réponse au serveur maître si le serveur esclave est incapable de traiter les informations dans le paquet de duplication de données et à stocker les informations dans le paquet de duplication de données ;
ladite couche utilisateur maîtresse étant adaptée à envoyer un message de retour-arrière à chacun de la pluralité de serveurs esclaves indiquant qu'il ne faut pas dupliquer sur les serveurs esclaves un changement affectant la copie originale des données si une réponse indiquant l'incapacité de traiter les informations dans le paquet de duplication de données est reçue depuis un ou plusieurs de la pluralité de serveurs esclaves.

2. Système selon la revendication 1, dans lequel ladite couche utilisateur maîtresse est adaptée à définir une valeur de fin de temporisation pour la duplication.

3. Système selon la revendication 1, dans lequel ladite couche utilisateur maîtresse est adaptée à créer des informations relatives à des changements entre l'état présent de la copie originale des données et l'état antérieur de la copie originale des données.

4. Système selon la revendication 1, dans lequel ladite couche utilisateur maîtresse est adaptée à créer des informations relatives à des changements entre l'état présent de la copie originale des données et un état précédent de la copie originale des données.

5. Système selon la revendication 1, dans lequel ladite couche utilisateur maîtresse est adaptée à générer un numéro de version unique pour chaque état de la copie originale des données.

6. Système selon la revendication 1, dans lequel ladite couche de service maîtresse est adaptée à transmettre en multidiffusion le paquet de duplication de données.

7. Système selon la revendication 1, dans lequel ladite couche de service maîtresse est adaptée à transmettre par pulsations le paquet de duplication de données.

8. Système selon la revendication 1, dans lequel ladite couche de service maîtresse est adaptée à inclure un numéro de version dans le paquet de duplication de données.

9. Procédé de duplication de données sur un réseau depuis un serveur maître incorporant une copie originale des données, ledit serveur maître comprenant une couche utilisateur maîtresse (202) et une couche de service maîtresse, et une pluralité de serveurs esclaves comprenant chacun une couche utilisateur esclave et une couche de service esclave, le procédé comprenant :
l'amorçage, par la couche utilisateur maîtresse (202), d'un processus de duplication de données par appel d'un procédé d'amorçage, la couche utilisateur maîtresse envoyant en outre des informations relatives à la copie originale des données à une couche de service maîtresse (206), les informations relatives à la copie originale des données prenant la forme d'un delta, le delta incorporant des informations relatives à des changements entre un état précédent et l'état actuel de la copie originale des données ;
l'incorporation, dans la couche de service maîtresse, du procédé d'amorçage et la réception, par la couche de service maîtresse, de l'appel depuis la couche utilisateur maîtresse et des informations relatives à la copie originale des données, la couche de service maîtresse créant et envoyant en outre un paquet de duplication de données incorporant au moins certaines des informations relatives à la copie originale des données à des couches de service esclaves respectives (208) de la pluralité de serveurs esclaves ;
la réception, par la couche de service esclave, du paquet de duplication de données depuis la couche de service maîtresse et le traitement, par la couche de service esclave, du paquet de duplication de données, la couche de service esclave envoyant en outre des informations relatives au paquet de duplication de données à une couche utilisateur esclave (204) ; et
la réception, par la couche utilisateur esclave, des informations relatives au paquet de duplication de données depuis la couche de service esclave, la couche utilisateur esclave signalant une réponse au serveur maître si le serveur esclave est incapable de traiter les informations dans le paquet de duplication de données et stockant les informations dans le paquet de duplication de données ;
le procédé comprenant l'envoi, depuis la couche utilisateur maîtresse à chacun de la pluralité de serveurs esclaves, d'un message de retour-arrière indiquant qu'il ne faut pas dupliquer sur les serveurs esclaves un changement affectant la copie originale des données si une réponse indiquant l'incapacité de traiter les informations dans le paquet de duplication de données est reçue depuis un ou plusieurs de la pluralité de serveurs esclaves.
